# EUROPÄISCHE PATENTSCHRIFT

(11) **EP 1 832 733 B1**
(45) Veröffentlichungstag und Bekanntmachung des Hinweises auf die Patenterteilung: **13.10.2010**
(21) Anmeldenummer: 07002421.1
(22) Anmeldetag: 05.02.2007
(51) Int. Cl.: F02C 7/04, F02K 3/06, B64C 11/14, B29C 70/32, B29C 70/38, B29C 53/60

(54) **Einlaufkonus aus einem Faserverbundwerkstoff für ein Gasturbinenwerk und Verfahren zu dessen Herstellung**
Inlet cone made of a fibre composite for a gas turbine plant and method for its manufacture
Cône d'entrée en matériau composite renforcé en fibres pour une turbine à gaz et son procédé de fabrication

(30) Priorität: 10.03.2006 DE 102006011513
(43) Veröffentlichungstag der Anmeldung: 12.09.2007
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE)

(56) Entgegenhaltungen:
- DE-A1- 2 924 602
- DE-A1- 19 810 119
- DE-C1- 19 503 939
- DE-U1- 8 324 715
- D. B. MIRACLE & S. L. DONALDSON: "Volume 21 Composites" Dezember 2001 (2001-12), ASM INTERNATIONAL , USA , XP002488464 ISBN: 0-87170-703-9 * Seite 536 - Seite 549 *

## Beschreibung

Die Erfindung betrifft einen Einlaufkegel aus einem Faserverbundwerkstoff für ein Gasturbinentriebwerk, insbesondere für ein Turbofan-Gasturbinentriebwerk, der ein Konusteil, ein Basisteil und ein Verkleidungsteil umfasst und aus in ein Harz eingebetteten Fasern besteht.

Derartige, zumeist als Kegel gestaltete Einlaufkonusse sollen zum einen eine möglichst verwirbelungsfreie Einlaufströmung in das Triebwerk bewirken und zum anderen durch auftreffende Fremdkörper oder -partikel, insbesondere Vogelschlag, bedingte Schäden begrenzen.

Bei einem beispielsweise aus der GB 0 102 169 bekannten, aus einem Faserverbundwerkstoff gefertigten Einlaufkonus ist das als Kegelspitze ausgebildete Konusteil durch ein zylindrisches Befestigungs- oder Basisteil mit Befestigungsflansch verlängert. Über den Flansch ist der Einlaufkonus axial am Fanrotor befestigt. Um bei dieser vorteilhaften Art der Einlaufkonusbefestigung dennoch eine verwirbelungsfreie Anströmung der Fanschaufeln zu erreichen, ist das zylindrische Basisteil durch ein separates, die Konizität des Konusteils fortsetzendes, beispielsweise aus Titan gefertigtes Verkleidungsteil abgedeckt. Abgesehen von dem erforderlichen Fertigungs- und Montageaufwand ist die zweiteilige Ausbildung auch strömungstechnisch nachteilig.

Document DE 195 03 939 C1 offenbart ein Verfahren zum Herstellen eines Druckspants, dadurch gekennzeichnet, dass auf einen Formkern eine Mehrzahl sich kreuzender und gegenseitig überdeckender Wickellagen gewickelt werden. Hierdurch wird eine erhöhte Bruchsicherheit erreicht.

Bekannte Verfahren zur Herstellung von aus einem Faserverbundwerkstoff bestehenden Einlaufkonussen für Triebwerke sind das Harzinjektionsverfahren und das häufiger eingesetzte Prepreg-Autoclave-Verfahren.

Beim Harzinjektionsverfahren wird in einen in ein Gesenk eingelegten trockenen Faserkörper mit Hilfe von Vakuum ein Harz infiltriert und unter Wärmeeinwirkung ausgehärtet. Probleme bereitet hier die nicht in jedem Fall gleichmäßige Infiltration des Harzes. Durch verringerten Infiltrationsgrad kann es zu Unregelmäßigkeiten in der Werkstoffstruktur kommen, die sich nachteilig auf das Impactverhalten des Einlaufkonus auswirkt.

Ein besseres Impactverhalten weisen die nach dem Prepreg-Autoclave-Verfahren hergestellten Einlaufkonusse auf. Bei diesem Verfahren werden mit einem Epoxidharz vorimprägnierte, aus einem Glasfasergewebe bestehende Segmente, in denen das Harz vorab gleichmäßig verteilt werden kann, in einem Gesenk mit der negativen Einlaufkonusgeometrie jeweils in einer exakt vorgegebenen Position manuell platziert. Das Aushärten erfolgt unter mittels Vakuum erzeugtem Druck sowie unter Wärmeeinfluss. Abgesehen davon, dass an den Nahtstellen Materialschwächungen auftreten können, ist das Prepreg-Verfahren wegen des hohen Fertigungsaufwandes nachteilig.

Der Erfindung liegt die Aufgabe zugrunde, einen aus Faserverbundmaterial bestehenden Einlaufkonus für ein Gasturbinentriebwerk zu entwickeln, der mit geringem Aufwand hergestellt und montiert werden kann und über eine hohe Beständigkeit gegenüber Schlageinwirkung durch auftreffende Vögel oder andere Gegenstände bzw. Partikel verfügt, sowie ein Verfahren zur Herstellung eines solchen Einlaufkonus anzugeben.

Erfindungsgemäß wird die Aufgabe mit einem gemäß den Merkmalen des Patentanspruchs 1 ausgebildeten Einlaufkonus und mit einem Verfahren zu dessen Herstellung gemäß den Merkmalen des Anspruchs 3 gelöst. Vorteilhafte Weiterbildungen der Erfindung sind Gegenstand der Unteransprüche.

Bei einem aus einem Faserverbundwerkstoff bestehenden Einlaufkonus für ein Gasturbinentriebwerk sind gemäß dem Grundgedanken der Erfindung das Konusteil, das Befestigungsteil und das Verkleidungsteil integral aus einem gewickelten Flechtwerk, bestehend aus einer Mehrzahl sich kreuzender und gegenseitig überdeckender Wickellagen gebildet, die aus im Wechsel und parallel angeordneten Glasfasersträngen und Kohlefasersträngen ähnlicher Stärke bestehen. Das so ausgebildete, von einem Kunstharz durchdrungene Geflecht ist durch Steifigkeit und Elastizität und eine hohe Impaktbeständigkeit gekennzeichnet. Aufgrund der einstückigen Fertigung mit gleichzeitig angeformten, als Anschlag-, Befestigungs- oder Zentrierring fungierenden Materialverstärkungen sind der Herstellungsaufwand und darüber hinaus auch der Montageaufwand gering. Eine wichtige Funktion kommt der Ausbildung der Wickellagen zu. Die zur Erhöhung der Steifigkeit dienenden Kohlefaserstränge haben zusammen mit den elastischen Glasfasersträngen durch die Brückenbildung zwischen den Glasfasern noch insofern eine synergistische Wirkung, als am Einlaufkonus wirkende Stöße abgefangen und weitergeleitet werden. Selbst dann, wenn die Kohlefasern durch hohe Schlagenergie bereits gebrochen sind, bleibt die Verbindung zwischen den Glasfasern über die angrenzenden Kohlefasern aufgrund des so genannten "bridging effect" - und damit auch die Funktionsfähigkeit des Einlaufkonus erhalten.

Gemäß dem erfindungsgemäßen Verfahren werden die Wickellagen trocken und/oder vorimprägniert auf einen kegelförmigen Formkern aufgewickelt. In das Geflecht wird ein Harz infiltriert. Auf die Oberfläche wird eine Kunstharzbeschichtung aufgebracht. Prinzipiell ist es auch denkbar, die Wickellagen vor dem Aufwickeln durch ein Kunstharzbad hindurchzuführen. Das Härten des Kunstharzes erfolgt in bekannter Weise unter Druck- und Wärmeeinwirkung. Im Anschluss kann eine spanende Bearbeitung der Anschlag-, Zentrier- und Befestigungsverstärkungen sowie des Bereichs zum Einfügen der Gummispitze des Einlaufkonus erfolgen.

Ein Ausführungsbeispiel wird anhand der Zeichnung näher erläutert. Es zeigen:

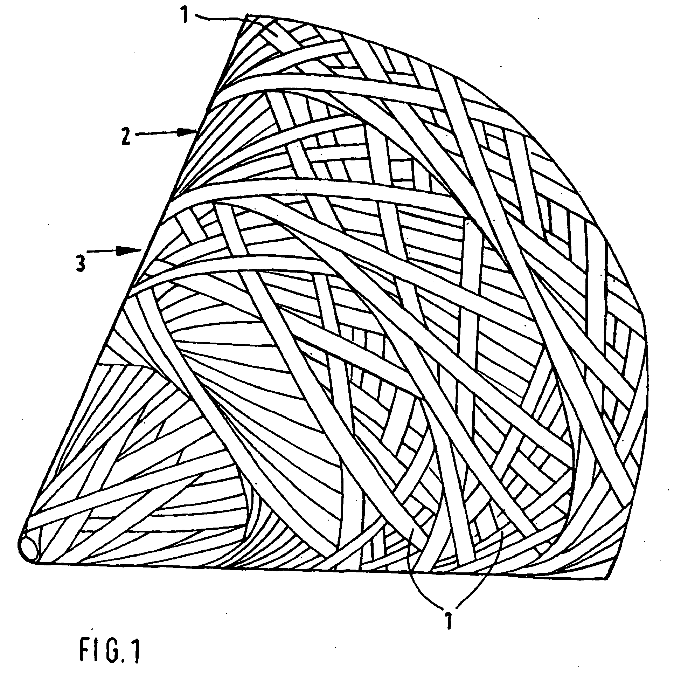

- Fig. 1 ,: einen aus sich in unterschiedlichem Winkel kreuzenden Wickellagen vorgefertigten Einlaufkonus; und

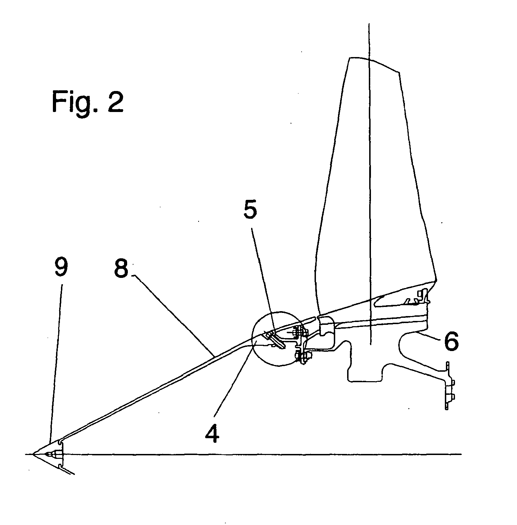

- Fig. 2: eine Teilansicht eines gewickelten, mit einer Radialverschraubung am Fanrotor gehaltenen einstückigen Einlaufkonus.

Auf eine aus einem kegelförmigen Kernen gebildete Form (nicht dargestellt) werden kontinuierlich Wickellagen 1, die aus im Wechsel und parallel zueinander angeordneten, trockenen oder vorimprägnierten Glasfaser- und Kohlefasersträngen gleicher Stärke bestehen, aufgewickelt. Mittels mehrerer Abwickler (nicht dargestellt) werden die Wickellagen 1 in unterschiedlichem Winkel und unter Bildung eines Flechtwerks 2, das heißt, gegenseitig einander überkreuzend und überdeckend, auf den Kegelkern gewickelt, so dass ein Einlaufkonus 3 aus miteinander verflochtenen Wickellagen 1 gebildet wird. Das Abwickeln der verschiedenen - einzelnen - Wickellagen auf den Kegelkern kann derart koordiniert werden, dass am Innenumfang des Einlaufkonus 3 umlaufende Materialverstärkungen ausgebildet werden. Diese Materialverstärkungen 4, 5 dienen einerseits zur radialen Verschraubung (4) und/oder Zentrierung oder als axiale Anschlagfläche (5) des fertigen Einlaufkonus 8 an der Fanrotorscheibe 6 und können auch umlaufende Versteifungsrippen (nicht dargestellt) zur Versteifung des Einlaufkonus, insbesondere in dem am meisten durch Vogelschlag belasteten mittigen Bereich des Einlaufkonus, bilden. In das Geflecht (Flechtwerk 2) des fertig gewickelten Einlaufkonus 3 wird nach dem bekannten RTM-Verfahren (Resin Transfer Moulding) ein Epoxidharz gegen ein Vakuum infiltriert und unter Druck- und Wärmeeinwirkung gehärtet. Auf die Oberfläche wird eine glatte Oberflächenbeschichtung aufgebracht. Nach dem Aushärten des Einlaufkonus 3 und dem Entformen erfolgt eine spanende Fertigbearbeitung, unter anderem zur Herstellung von Befestigungsbohrungen und Senklöchern 7 zur Verbindung des Einlaufkonus 8 mit der Fanrotorscheibe 6 und für die sichere Fixierung der Gummispitze 9 des Einlaufkonus 8.

Der nach dem oben beschriebenen Verfahren hergestellte, einstückig ausgebildete Einlaufkonus kann aufgrund des einstückigen Wickelns mit an der Innenwand angeformten Materialverstärkungen kostengünstig und mit geringem Aufwand herstellt und montiert werden und zeichnet sich durch eine hohe Steifigkeit und Widerstandsfähigkeit gegenüber Schlageinwirkung und Erosion aus. Delaminationserscheinungen, wie sie beispielsweise bei nach dem Prepreg-Verfahren aus Segmenten gefertigten Einlaufkonussen auftreten können, sind nicht zu befürchten. Die vorteilhaften mechanischen Eigenschaften ergeben sich aus der Ausbildung des Einlaufkonus als Flechtwerk, den im Wesentlichen gerade verlaufenden bzw. sich in einem gro-βen Radius erstreckenden Wickellagen aus geraden (nicht geknickten) Fasersträngen und der parallelen, abwechselnd aneinander grenzenden Anordnung von ähnlich dicken Glasfaser- und Kohlefasersträngen in einer Wickellage. Durch die aneinander grenzende parallele Anordnung der elastischen Glasfasern und der die Steifigkeit verbessernden Kohlefasern wird ein durch diese Faseranordnung bedingter synergistischer Effekt insofern erreicht, als bei einer erheblichen mechanischen Einwirkung auf den Einlaufkonus zwar erste Kohlefasern versagen können, aber selbst gebrochene Kohlefasern für eine Brückenbildung zwischen den Glasfasern sorgen und die zwischen den Kohlefasern liegenden Glasfasern die auftretenden Kräfte dennoch aufnehmen und weiterleiten können, so dass die Schlagenergie verteilt und abgebaut wird und der Einlaufkonus als Ganzes erhalten bleibt.

### Bezugszeichenliste

- 1: Wickellage
- 2: Flechtwerk, Geflecht
- 3: Doppeleinlaufkonus
- 4: Materialverstärkung (Radialverschraubung)
- 5: Materialverstärkung (Axialanschlag)
- 6: Fanrotorscheibe
- 8: Einlaufkonus
- 9: Gummispitze

## Patentansprüche

1. Einlaufkonus aus einem Faserverbundwerkstoff für ein Gasturbinentriebwerk, insbesondere für ein Turbofan-Gasturbinentriebwerk, der ein Konusteil, ein Befestigungsteil und ein Verkleidungsteil umfasst und aus in ein Harz eingebetteten Fasern besteht, **gekennzeichnet durch** ein einstückiges, gewickeltes Flechtwerk (2) aus sich kreuzenden und gegenseitig überdeckenden Wickellagen (1), die aus im Wechsel und parallel aneinander grenzenden Glasfaser- und Kohlefasersträngen ähnlicher Stärke zur Erzielung einer Brückenwirkung zwischen den Glasfasern auch über bereits **durch** Schlageinwirkung gebrochene Kohlefasern bestehen.

2. Einlaufkonus nach Anspruch 1, **dadurch gekennzeichnet, dass** an dessen Innenumfang im Wickelprozess angeformte Materialverstärkungen (4, 5) für die Schraubbefestigung, Zentrierung, als Axialanschlag oder als Versteifung ausgebildet sind.

3. Verfahren zur Herstellung des Einlaufkonus' nach Anspruch 1, **dadurch gekennzeichnet, dass** auf einen kegelförmigen Formkern eine Mehrzahl sich kreuzender und gegenseitig überdeckender Wickellagen, die aus parallelen und im Wechsel aneinander grenzenden, gleichstarken Strängen aus Glasfasern und Kohlefasern, und zwar zur Erzielung einer Brückenwirkung zwischen den Glasfasern auch über bereits durch Schlageinwirkung gebrochene Kohlefasern, bestehen, gewickelt werden.

4. Verfahren nach Anspruch 3, **dadurch gekennzeichnet, dass** in das Geflecht ein Harz infiltriert und auf die Oberfläche aufgebracht wird.

5. Verfahren nach Anspruch . 3, **dadurch gekennzeichnet, dass** die Wickellagen vorimprägniert sind.

6. Verfahren nach Anspruch 3, **dadurch gekennzeichnet, dass** die Wickellagen vor dem Wickeln in einem Harzbad getränkt werden.

7. Verfahren nach einem der Ansprüche 3 bis 6, **dadurch gekennzeichnet, dass** die Außenfläche des Formteils mit einem Harz beschichtet wird.

8. Verfahren nach einem der Ansprüche 3 bis 7, **dadurch gekennzeichnet, dass** das Harz für den Faserverbund und die Oberflächenbeschichtung unter Druck- und Temperatureinwirkung ausgehärtet wird..

9. Verfahren nach Anspruch 3, **dadurch gekennzeichnet, dass** das Formteil nach dem Entformen zur Ausbildung von Anschlag- und Zentriermitteln sowie Befestigungslöchern und zur Anbringung einer Gummispitze spanend bearbeitet wird.

## Claims

1. Intake cone in a fiber-composite material for a gas-turbine engine, especially a turbofan gas-turbine engine, including a conical part, an attachment part and a fairing part, and made of fibers embedded in a resin, **characterized by** a one-piece wound interlace (2) of mutually crossing and covering winding layers (1), consisting of adjacent glass fiber strands and carbon fiber strands of similar thickness in alternate and parallel arrangement, in order to achieve a bridging effect between the glass fibers, also above carbon fibers already broken by the impact effect.

2. Intake cone in accordance with Claim 1, **characterized in that** material reinforcements (4, 5) are formed on the inner circumference in the winding process and used for threaded attachment, centering, axial abutment or stiffening.

3. Method for the manufacture of the intake cone in accordance with Claim 1, **characterized in that** on a conical moulding core, a plurality of mutually crossing and covering winding layers are wound, these winding layers consisting of adjacent glass fiber strands and carbon fiber strands of equal thickness in parallel and alternate arrangement, actually in order to achieve a bridging effect between the glass fibers, also above carbon fibers already broken by the impact effect.

4. Method in accordance with Claim 3, **characterized in that** a resin is infiltrated into the interlace and applied to the surface.

5. Method in accordance with Claim 3, **characterized in that** the winding layers are preimpregnated.

6. Method in accordance with Claim 3, **characterized in that** the winding layers are impregnated in a resin bath prior to winding.

7. Method in accordance with one of the Claims 3 to 6, **characterized in that** a resin is applied to the outer surface of the moulding part.

8. Method in accordance with one of the Claims 3 to 7, **characterized in that** the resin for the fiber-composite material and the surface coating is cured by the effect of pressure and heat.

9. Method in accordance with Claim 3, **characterized in that** the moulding part is machined upon removal from the mould to produce the abutment and centering means as well as the attachment holes, and to fix a rubber tip.

## Revendications

1. Cône d'entrée en matériau renforcé par des fibres et destiné à un moteur à turbine à gaz, en particulier à un moteur à turbine à gaz à double flux, qui comprend un élément conique, un élément de fixation et un élément de carénage et est constitué de fibres noyées dans une résine, **caractérisé par** un entrelacement monobloc enroulé (2) de couches d'enroulement (1) se croisant et se recouvrant mutuellement, qui sont alternativement constituées de faisceaux de fibres de verre et de faisceaux de fibres de carbone d'épaisseurs comparables se jouxtant parallèlement afin d'obtenir un effet de pontage entre les fibres de verre également par-dessus des fibres de carbone déjà rompues sous l'effet d'impacts.

2. Cône d'entrée selon la revendication n° 1, **caractérisé en ce que** sur son pourtour intérieur sont formés des renforcements du matériau (4, 5) façonnés lors du processus d'enroulement pour la fixation par vis, le centrage, comme butée axiale ou comme raidisseur.

3. Procédé pour la fabrication du cône d'entrée selon la revendication n° 1, **caractérisé en ce que** sur un coeur de moule conique sont enroulées une pluralité de couches d'enroulement se croisant et se recouvrant mutuellement, qui sont constituées de faisceaux de fibres de verre et de faisceaux de fibres de carbone parallèles d'épaisseurs comparables se jouxtant alternativement, et ce afin d'obtenir un effet de pontage entre les fibres de verre également par-dessus des fibres de carbone déjà rompues sous l'effet d'impacts.

4. Procédé selon la revendication n° 3, **caractérisé en ce qu'**une résine est infiltrée dans l'entrelacement et appliquée sur la surface.

5. Procédé selon la revendication n° 3, **caractérisé en ce que** les couches d'enroulement sont préimprégnées.

6. Procédé selon la revendication n° 3, **caractérisé en ce que** les couches d'enroulement sont imprégnées dans un bain de résine avant d'être enroulées.

7. Procédé selon une des revendications n° 3 à n° 6, **caractérisé en ce que** la surface extérieure de la pièce moulée est recouverte d'une résine.

8. Procédé selon une des revendications n° 3 à n° 7, **caractérisé en ce que** la résine pour le matériau renforcé par des fibres et pour le revêtement de la surface est durcie sous l'effet de la pression et de la chaleur.

9. Procédé selon la revendication n° 3, **caractérisé en ce qu'**après le démoulage, la pièce moulée est usinée par enlèvement de copeaux pour former des moyens de butée et de centrage ainsi que des trous de montage, et pour fixer une pointe en caoutchouc.
